# EUROPÄISCHE PATENTSCHRIFT

(11) **EP 0 701 028 B1**
(45) Veröffentlichungstag und Bekanntmachung des Hinweises auf die Patenterteilung: **22.04.1998**
(21) Anmeldenummer: 94114281.2
(22) Anmeldetag: 12.09.1994
(51) Int. Cl.: E03C 1/04, E03C 1/05, F16K 11/20

(54) **Sanitäre Armatur**
Sanitary armature
Armature sanitaire

(43) Veröffentlichungstag der Anmeldung: 13.03.1996
(73) Patentinhaber: KWC AG, CH-5726 Unterkulm (CH)
(72) Erfinder: Simotti, Vittore, CH-5000 Aarau (CH); Brunner, Arthur, CH-8916 Jonen (CH)
(74) Vertreter: Patentanwälte Schaad, Balass, Menzl & Partner AG

(56) Entgegenhaltungen:
- EP-A- 0 432 440
- EP-A- 0 432 553
- EP-A- 0 455 998
- EP-A- 0 577 164
- US-A- 4 681 141

## Beschreibung

Die Erfindung betrifft eine sanitäre Armatur, insbesondere Waschbeckenarmatur, gemäss dem Oberbegriff des Patentanspruchs 1.

Eine sanitäre Armatur dieser Art, wie beispielsweise bekannt aus EP-A-0 432 440, weist ein mittels eines Schraubenbolzens an einem Waschbecken befestigtes L-förmigen Tragelement auf. Am Tragelement ist ein Absperrventilblock mittels Schrauben befestigt, in welchen je eine Zuleitung für das Kalt- und das Warmwasser mündet, die als durch einen Durchlass im Tragelement hindurchgeführtes Rohr ausgebildet ist. Auf dem Absperrventilblock sitzt ein Hilfsventilblock, der mittels Schrauben auf dem Absperrventilblock befestigt ist. Vom Hilfsventilblock führt eine Auslassleitung zu einem Wasserauslasskopf. Die aktiven Teile der Armatur sind von einem wegnehmbaren haubenartigen Gehäuse überdeckt.

Bei vielen momentan auf dem Markt erhältlichen Armaturen ist ein ähnlicher Aufbau vorhanden, d.h. die die Absperrventile und die Mischeinheit tragenden Teile sind an einem Tragelement angeschraubt, auf welchem ebenfalls ein Gehäuse oder eine die Teile überdeckende Haube mittels Schrauben befestigt ist. Es gibt auch Armaturen, bei welchen eine bedienbare Steuerpatrone in einem am Waschbecken befestigten Gehäuseteil oder in einem mit diesem verbundenen Gehäuseteil teilweise eingelassen sind (siehe z.B. EP-A-0455 998 oder EP-A-0 432 553). Insbesondere ist bei allen diesen Ausführungen ein relativ arbeitsaufwendiger Aufbau gegeben, was sich sowohl bei der Herstellung als auch bei der Revision dieser Armaturen als nachteilig erweist. Entweder müssen die Armaturen zum Revidieren von Komponenten im Innern des Gehäuses wieder in das Herstellwerk zurückgeschickt werden oder sie müssen vom Sanitärfachmann an Ort und Stelle mehr oder weniger komplett zerlegt werden.

Der vorliegenden Erfindung liegt nun die Aufgabe zugrunde, eine gattungsgemässe sanitäre Armatur mit einfachem Aufbau zu schaffen, die mit wenigen Handgriffen zerlegt und zusammengesetzt werden kann, und dadurch eine zeitsparende und kostengünstige Montage sowie eine mit wenig Aufwand verbundene Revision am Installationsort ermöglicht.

Diese Aufgabe wird mit einer die Merkmale des Anspruchs 1 aufweisenden Armatur gelöst.

Das Einschieben der Steuerpatrone in eine, vorzugsweise durchgehende Ausnehmung in einem Tragelement hat neben der schnellen Austauschbarkeit auch den grossen Vorteil, dass die Anschlussöffnungen zwischen dem Tragelement und der Steuerpatrone auf einfacher und genauer Art strömungsmässig in Übereinstimmung bringbar sind. Ein weiterer erheblicher Vorteil ist die einfache Befestigung oder Sicherung des Gehäuses am Tragelement mittels der durch das Gehäuse hindurchragenden Steuerpatrone. Dadurch können alle modulartigen Armaturbestandteile mit einem einzigen Befestigungselement, beispielsweise einer einzigen Schraube, zusammengehalten werden. Ferner wurde durch den bevorzugt symmetrischen Aufbau der Steuerpatrone eine wesentlich einfachere Zugänglichkeit auch der einzelnen Teile wie Absperrventile und elektromagnetische Betätigungsorgane erhalten. Ein weiterer Vorteil der erfindungsgemässen Armatur ist der damit ermöglichte robuste Aufbau, was sie sicherer gegen Vandalismus macht.

Weitere Vorteile der Erfindung folgen aus den unabhängigen Ansprüchen und aus der nachfolgenden Beschreibung. Dort wird die Erfindung anhand eines in den Zeichnungen dargestellten Ausführungsbeispieles näher erläutert. Es zeigen:
- Fig. 1: einen Teil einer Mischarmatur mit einer Steuerpatrone in einen Schnitt in Längsrichtung der Steuerpatrone;
- Fig. 2: in Seitenanschicht die Mischarmatur gemäss Figur 1, teilweise geschnitten in einer rechtwinklig zur Längsrichtung der Steuerpatrone verlaufenden Schnittebene;
- Fig. 3: einen Detailausschnitt des Steuerelements im Bereich des Pfeils A in Figur 1; und
- Fig. 4: einen Schnitt durch die Mischarmatur längs der Linie B-B in Figur 1, jedoch in der entgegengesetzten Richtung zur Seitenansicht der Figur 2.

In allen Figuren werden für dieselben Elemente dieselben Bezugszeichen verwendet, so dass auf eine wiederholte Beschreibung der einzelnen Elementen zu jeder Figur verzichtet worden ist.

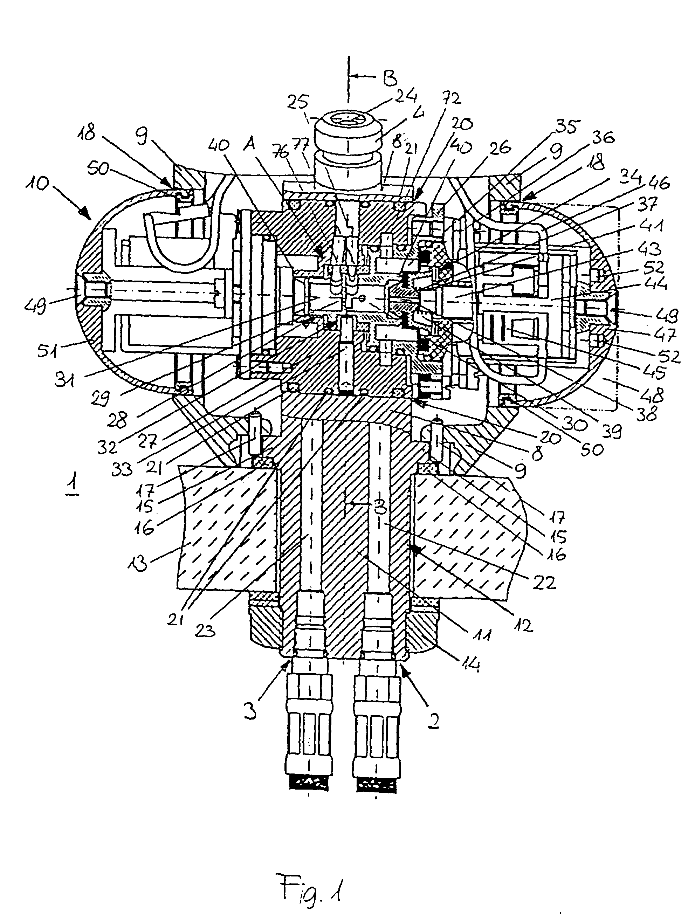

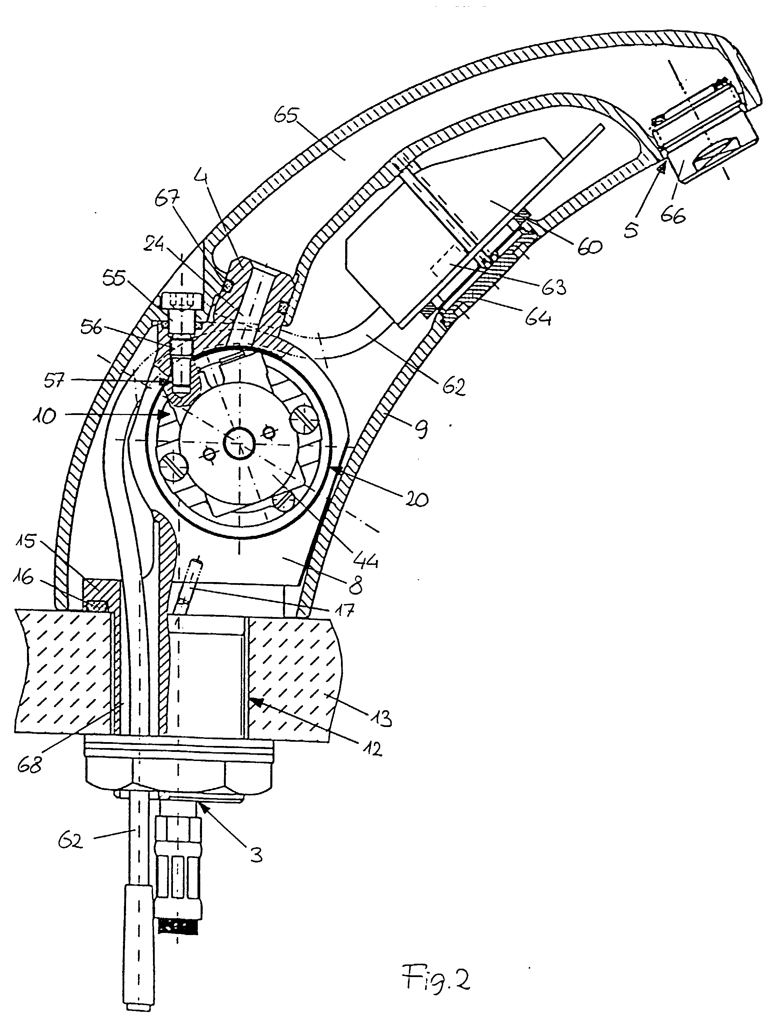

In Figur 1 ist teilweise eine elektronisch gesteuerte sanitäre Armatur 1, eine Waschbeckenarmatur, dargestellt, die einen Kaltwassereinlass 2, einen Warmwassereinlass 3 und einen mit einem Mischwasserauslass 5 (vergleiche Figur 2) verbundenen Anschlussstutzen 4 aufweist. Die Armatur 1 weist im wesentlichen drei modulartige Bauelemente auf, nämlich ein Tragelement 8, ein über dieses gestülptes Gehäuse 9 und eine in das Tragelement 8 eingesetzte, das Gehäuse 9 durchgreifende Steuerpatrone 10. Das Tragelement 8 ist mit einem Befestigungsstutzen 11 durch eine zylindrische öffnung 12 in einem Waschbecken 13 hindurchgeführt und mit einer Haltemutter 14 befestigt. Das Tragelement 8 ist oberhalb des Waschbeckens 13 mit einem ringförmigen Wulst 15 versehen, der einen Dichtungsring 16 zwischen sich und dem Waschbecken 13 einklemmt. Im Befestigungsbereich mit dem Waschbecken 13 sind zwischen dem Gehäuse 9 und dem Tragelement 8 Führungselemente oder -stifte 17 vorgesehen, die ebenfalls in Figur 2 ersichtlich sind. Diese Führungsstifte 17 sind am Innenflansch des Gehäuses befestigt und greifen in nutartige Ausnehmungen des Wulstes 15 ein. Unterhalb des Waschbeckens 13 sind in bekannter Art ein weiterer Dichtungsring und eine Unterlagsscheibe zur klemmenden Befestigung vorgesehen.

Im Gehäuse 9 sind auf einander gegenüberliegenden Seiten kreisrunde Durchlässe 18 für die Aufnahme der Steuerpatrone 10 vorgesehen. Ferner ist im Tragelement 8 oberhalb des Wulstes 15 eine kreiszylindrische Ausnehmung 20 rechtwinklig zur Längsrichtung der sanitären Armatur 1 vorgesehen, durch welche hindurch die Steuerpatrone 10 geschoben ist. Der Durchmesser der kreisrunden Durchlässe 18 ist etwas grösser als der Durchmesser der dazu koaxial angeordneten kreiszylindrischen Ausnehmung 20. Damit ist eine problemlose Einführung der Steuerpatrone 10 gewährleistet. Mittels gummielastischer Dichtungsringe 21 ist die Steuerpatrone 10 wasserdicht in der Ausnehmung 20 gehalten. Im Tragelement 8 sind als Zuleitungen von den entsprechenden Wassereinlässen 2 und 3 ein Kaltwasserkanal 22 und ein

Warmwasserkanal 23 eingelassen, die in die kreiszylindrische Ausnehmung 20 münden (siehe auch Figur 4). Durch den Anschlussstutzen 4 hindurch verläuft ein Verbindungskanal 24, der in Strömungsverbindung mit einem Mischwasserkanal 25 in der Steuerpatrone 10 steht.

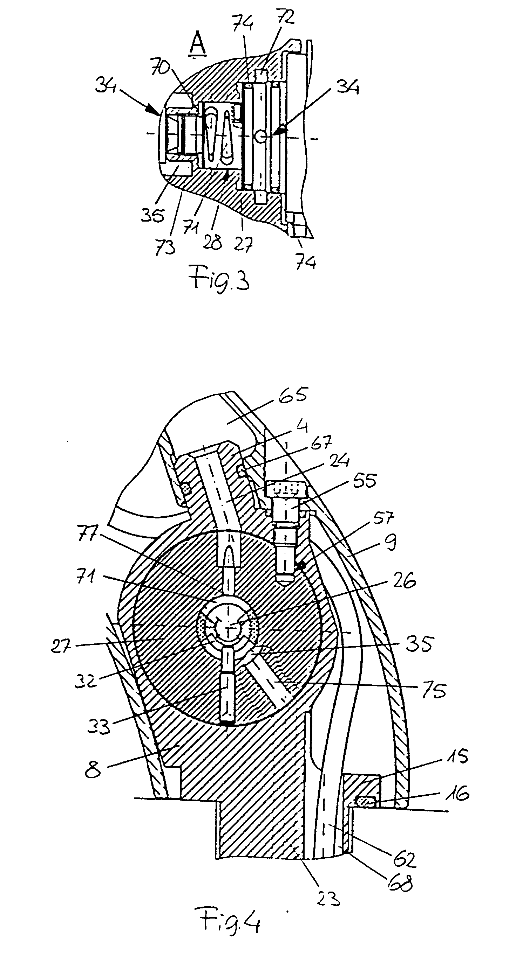

Die Steuerpatrone 10 weist einen drehbeweglichen Teil 26 und einen ortsfesten Teil 27 auf. Wie aus der Figur 1 ersichtlich sind die beiden Teile 26 und 27 stufenweise verjüngt ausgebildet, wobei der drehbewegliche Teil 26 in den ortsfesten Teil 27 eingreift, d.h. dass die Verjüngung des ortsfesten Teils 27 sich eigentlich auf die keilförmige öffnung bezieht. Ein Steuerelement zwischen dem drehbeweglichen Teil 26 und dem ortsfesten Teil 27 ist allgemein mit A bezeichnet, und weist einen rotationssymmetrischen Hohlkörper 28 im drehbeweglichen Teil 26 und kreisrunde Öffnungen 76, 77 im ortsfesten Teil 27 auf. Der Hohlkörper 28 ist durch eine Trennwand 29 in eine Kaltwasserkammer 30 und eine Warmwasserkammer 31 getrennt. In diesem Beispiel sind die beiden Kammern 30 und 31 kreiszylindrisch ausgebildet. Jedoch kommen für die Kammern 30 und 31 durchaus auch andere rotationssymmetrische Hohlkörper, wie ein hohler Kreiskegelstumpf, in Frage. Der Mischwasserkanal 25 im ortsfesten Teil 27 verzweigt sich auf der dem drehbeweglichen Teil 26 zugewandten Seite in zwei Teilkanäle, welche die kreisrunden öffnungen 76 und 77 aufweisen. Weitere Einzelheiten zum Steuerelement A werden weiter unten in Zusammenhang mit der Figur 3 näher beschrieben.

Am Umfang des drehbeweglichen Teils 26 ist in der Symmetrieebene der Steuerpatrone 10 eine in Umfangsrichtung verlaufende, begrenzte Nut 32 vorgesehen, in welcher ein im ortsfesten Teil 27 der Steuerpatrone 10 befestigter, nach innen vorstehender Stift 33 radial eingreift. Die Nut 32 ist breiter als der Durchmesser des Stiftes 33, so dass dieser nicht an den Seitenwänden der Nut 32 anliegt. Der Stift 33 bildet zusammen mit den stirnseitigen Enden oder Anschlägen der Nut 32 eine Drehbegrenzung für den drehbeweglichen Teil 26 der Steuerpatrone 10.

In der Figur 1 rechts zur Drehbegrenzung ist im drehbeweglichen Teil 26 ein Absperrventil 34 für Kaltwasser vorgesehen, welches in bekannter Weise einen Ringkanal 35, einen als gummielastische Membrane ausgebildeten Verschlussteil 36, einen Haltekopf oder ringförmigen Versteifungsteil 37 mit einer zentralen Öffnung 38 und einen Vorsteuerraum 39 aufweist. Wie ersichtlich, liegt die gummielastische Membrane 36 auf einem ringförmigen Ventilsitz 40 am Hohlkörper 28 verschlussdicht auf. Die gummielastische Membrane 36 weist noch einen hier nicht weiter dargestellten kleinen Durchlass zwischen dem Ringkanal 35 und dem Vorsteuerraum 39 auf. Eine Druckfeder 41 ist zwischen dem Versteifungsteil 37 und dem abgestuften stiftartigen Anker 43 eines elektromagnetischen Betätigungsorgans oder Elektromagneten 44 abgestützt, um die Membrane 36 nach dem Öffnen des Absperrventils 34 wieder gegen den Ventilsitze 40 zu drängen.

Wenn das Absperrventil 34 geöffnet ist, wird der Druck im Vorsteuerraum 39 kleiner, da die zentrale Öffnung 38 im ringförmigen Versteifungsteil 37 grösser ist als der (nicht gezeigte) kleine Durchlass in der Membrane 36. Dadurch wird die Membrane 36 in der Figur 1 nach rechts gedrückt und somit das durch den Ventilsitz 40 und den Versteifungsteil 37 mit der Membrane 36 gebildete Hauptventil geöffnet. Die Druckfeder 41 ist nicht so stark ausgebildet, dass sie dies verhindern kann. Erst wenn die zentrale Öffnung 38 im Versteifungsteil 37 wieder durch den Anker 43 verschlossen ist, drückt die Druckfeder 41 zusammen mit dem sich wieder aufbauenden Druck die Membrane 36 in der Figur 1 nach links gegen den Ventilsitz 40.

Die Funktionsweise eines solchen Absperrventils 34 ist allgemein bekannt und beispielsweise der europäischen Patentanmeldung EP-A-0 429 915 der Anmelderin zu entnehmen, weshalb hier auf eine weitere Erklärung verzichtet wird. Der Elektromagnet 44 ist mit Anschlussklemmen 45 über elektrische Kabel 46 mit einer in Figur 2 dargestellten Steuerelektronik 60 verbunden. Ein kugelkalottenartiges Bedienungselement oder Drehknopf 47 mit einem gestrichelt angedeuteten Flügel 48 ist durch eine Schraube 49 auf dem Elektromagneten 44 als Abdeckung befestigt. Im Bereich um die Schraube 49 sind am Elektromagneten 44 Positionierungsstifte 52 befestigt, welche in entsprechenden Sacklochbohrungen im Drehknopf 47 eingreifen. Am Innenrand des kugelkalottenartigen Bedienungselement 47 ist eine kleine Nut eingelassen, in welche ein Dichtring 50 mit seinen Dichtlippen eingreift. Wie ersichtlich, durchgreift der Rand des Drehknopfes 47 mit seinem Dichtring 50 den Durchlass 18 im Gehäuse 9, so dass sich eine spritzwasserfeste Abdichtung ergibt, die gleichzeitig einen Schutz vor Vandalen bietet. In Figur 1 links des Steuerelementes A ist ebenfalls ein gleichartiges Absperrventil 34 für Warmwasser mit einem am ortsfesten Teil 27 befestigten Elektromagneten 44 vorgesehen. Der Ventilsitz 40 ist in diesem Fall auch mit dem ortsfesten Teil 27 der Steuerpatrone 10 verbunden. Eine ähnliche kugelkalottenartige Abdeckung 51 ist an diesem linken Elektromagneten 44 mit einer Schraube 49 befestigt.

Figur 2 zeigt ein Teilschnitt längs der Linie B-B in Figur 1 und eine Seitenansicht auf den abgedeckten Elektromagnet 44 des in der Figur 1 gesehen, linken Absperrventils 34. Sie stellt deutlich die Befestigung des Tragelementes 8 auf dem Waschbecken 13 und die Befestigung des über das Tragelement 8 gestülpten Gehäuses 9 dar. Der Anschlussstutzen 4 und die Führungsstifte 17 sind in derselben Richtung ausgerichtet, d.h. mit einem Winkel von etwa 15° zur Längsachse des Befestigungsstutzens 11, so dass das Gehäuse 9 beim Aufstülpen auf das Tragelement 8 richtungsgeführt ist. Mittels einer einzigen Innensechskantschraube 55 ist das Gehäuse 9 auf dem Tragelement 8 befestigt. Wie ersichtlich ist die Schraube 55 stufenartig ausgebildet und weist nur im mittleren Bereich ein Gewinde 56 auf. Das Ende der Schraube 55 ist stiftartig ausgebildet und in eine Sacklochbohrung 57 im ortsfesten Teil 27 der Steuerpatrone 10 eingesteckt. Dadurch ist die Steuerpatrone 10 verdrehungs- und seitlich verschiebungssicher mit dem Tragelement 8 befestigt. Damit wird mit der Schraube 55 eine zweifache Funktion erreicht, nämlich die Befestigung des Gehäuses 9 auf dem Tragelement 8 und gleichzeitig die Sicherung der eingeschobenen Steuerpatrone 10 im Tragelement 8. Damit ist auch gleichzeitig sichergestellt, dass die öffnungen der in die Ausnehmung 20 mündende Kanäle 22, 23 und 24, welche Teile der Zuleitungen und der Auslassleitung bilden, strömungsmässig in passender Übereinstimmung mit den Anschlussöffnungen der Steuerpatrone 10 gebracht werden.

Zur Längsrichtung des Befestigungsstutzens 11 versetzt ist oberhalb des Tragelementes 8 im Gehäuse 9 die Steuerelektronik 60 angeordnet, welche mit einem gestrichelt angedeuteten Radar-Sensor 63 versehen ist. Die Steuerelektronik 60 ist einerseits mit einem Stromversorgungskabel 62 und andererseits über die Kabel 46 mit den Elektromagneten 44 (Fig. 1) elektrisch verbunden. An entsprechender Stelle ist im Gehäuse 9 noch ein aus einem vorzugsweise durchsichtigen Plastikmaterial hergestelltes Fenster 64 für den Radar-sensor 63 vorgesehen. Das Fenster 64 kann jedoch auch undurchsichtig sein, da Plastikmaterial normalerweise keine Behinderung der hochfrequenten Radarsignale darstellt. Im Gehäuse 9 ist ferner oberhalb des Tragelementes 8 und oberhalb der Steuerelektronik 60 ein Ausflusskanal 65 geformt, der ein weiterer Teil der Auslassleitung bildet. In das Ende dieses Ausflusskanals 65 ist ein Ausflusskopf 66 eingeschraubt, welcher den Mischwasserauslass 5 bildet. Das dem Tragelement 8 zugewandte andere Ende des Ausflusskanals 65 ist auf dem Anschlussstutzen 4 aufgestülpt und mittels eines gummielastischen Dichtungsringes 67 wasserdicht abgeschlossen. Ferner ist im Tragelement 8 noch ein durch den Befestigungsstutzen 11 hindurch verlaufender Kabelkanal 68 für das Stromversorgungskabel 62 ausgebildet.

In Figur 3 ist das Steuerelement A ausschnittsweise im Teilschnitt dargestellt. Links in der Figur ist das Absperrventil 34 mit seinem Ringkanal 35 teilweise zu sehen. In der Wandung des rotationssymmetrischen Hohlkörpers 28 sind zwei radiale nutenförmige Durchlässe 70 und 71 vorgesehen, die gegensinnig in Umfangsrichtung verjüngt sind. Diese Durchlässe 70 und 71 wirken strömungsmässig mit den Öffnungen 76 und 77 der Teilkanäle des Mischwasserkanals 25 (siehe Figur 1) zusammen. Rechts von diesen Durchlässen 70 und 71 ist eine Verbindungsringnut 72 zu sehen, die einerseits mit dem Ringkanal 35 des rechten Absperrventils 34 und andererseits mit dem Kaltwassereinlass 2 über einen Anschlusskanal 75 im ortsfesten Teil 27 (siehe Fig. 4) und den Kaltwasserkanal 22 in Strömungsverbindung steht.

Der drehbewegliche Teil 26 ist im ortsfesten Teil 27 der Steuerpatrone 10 von einem Gewinde 73 mit geringer Steigung gelagert. Zur Abdichtung zwischen dem drehbeweglichen Teil 26 und dem ortsfesten Teil 27 sind ferner gummielastische O-Ringe 74 vorgesehen.

Figur 4 zeigt einen Querschnitt längs der Linie B-B in Figur 1, und im Vergleich zur Figur 2 in entgegengesetzter Richtung. Insbesondere zeigt diese Figur 4 deutlich die Begrenzung der Nut 32, die in etwa dieselbe Bogenlänge aufweist, wie die der nutenförmigen Durchlässe 70 und 71 (Fig.3). Damit ist sichergestellt, dass immer die gleiche Wassermenge durch das Steuerelement A fliessen kann. Die Verbindung zwischen der Ringkanal 35 und dem Anschlusskanal 75 zum gestrichelt angedeuteten Warmwasserkanal 23 ist hier in einem Teilschnitt hervorgehoben. Der Teilschnitt liegt in einer Ebene, die etwa durch die Längsachse des Warmwasserkanals 23 geht (siehe Figur 1). Daraus ist ersichtlich, dass der Anschlusskanal 75 sich im ortsfesten Teil 26 der Steuerpatrone 10 befindet. Eine ähnliche Strömungsverbindung besteht zwischen dem Ringkanal 35 des rechten Absperrventils 34, bei welchem der (in den Figuren nicht dargestellten) Anschlusskanal sich ebenfalls im ortsfesten Teil 26 der Steuerpatrone 10 befindet. In diesem Fall fliesst das Kaltwasser über die Verbindungsnut 72 (vergleiche Fig. 1 und 3) zum Ringkanal 35.

Aufgrund der Figuren 1, 2 und 4 lässt sich für den Fachmann die Werksmontage der sanitären Armatur 1 mit den drei modulartigen Teilen sehr einfach nachvollziehen. Zunächst werden die Einzelteile der Steuerpatrone 10 zusammengesetzt, ohne das kugelkalottenartige Bedienungselement 47 und die gleichförmige Abdeckung 51 schon zu befestigen. Dann wird das Stromversorgungkabel 62 durch den Kabelkanal 68 gestossen und das Gehäuse 9 über das Tragelement 8 gestülpt, wobei die Führungsstifte 17 und der Anschlussstutzen 4 eine positionsgenaue Führung gewährleisten. Daraufhin werden die elektrischen Kabel 46 durch die Durchlässe 18 des Gehäuses 9 nach aussen geführt. Die elektrischen Kabel 46 sind für diesen Zweck etwas länger, so dass die Überlänge nachher zurück in das Gehäuse 9 gestossen werden muss. Ferner wird die Steuerpatrone 10 in die Aufnehmung 20 geschoben, und die Anschlussklemmen 45 während des Einschiebens der Steuerpatrone 10 in das Tragelement 8 auf entsprechende Flachstecker der Elektromagnete 44 aufgesteckt. Dann wird die Sechskantschraube 55 in das Tragelement 8 festgeschraubt und werden das kugelkalottenartige Bedienungselement oder Drehknopf 47 und die Abdeckung 51 auf die Elektromagnete 44 geschraubt. Das Bedienungselement 47 wird dabei durch die Positionierungsstifte 52 richtig positioniert. Die so montierte sanitäre Armatur 1 ist dann fertig für die Befestigung auf ein Waschbecken 13. Dort braucht der Sanitärfachmann nur die Haltemutter 14 festzuschrauben und die Anschlussrohre für Warm- und Kaltwasser mit den hier nicht näher bezeichneten hohlen Befestigungsschrauben und das Stromversorgungskabel 62 anzuschliessen. Eine Demontage der Armatur 1 an Ort und Stelle lässt sich mit einem paar Handgriffen in umgekehrter Reihenfolge wie die obenbeschriebene Werksmontage so weit notwendig bewerkstelligen. Damit können Absperrventile 34 und/oder Elektromagnete 44 bei einer Revision sehr schnell ersetzt werden. Eine zu revidierende sanitäre Armatur 1 braucht deshalb in der Regel nicht mehr in das Herstellwerk zurückgesandt zu werden, wodurch wesentliche Versand- und Arbeitskosten eingespart werden können.

Die Funktion der beschriebenen sanitären Armatur 1 ist wie folgt: werden zu waschende Hände oder Gegenstände vom Radar-Sensor 63 im Bereich des Ausflusskopfes 66 erfasst, steuert die Steuerelektronik 60 die Elektromagnete 44 an, welche daraufhin die Absperrventile 34 für Kalt- und Warmwasser vollständig öffnen. Mit dem Drehknopf 47 lässt sich die Wassertemperatur aufgrund der Mischung von Kalt- und Warmwasser am Steuerelement A einstellen. Es kann jedoch auch kein Drehknopf 47 an der sanitären Armatur 1 vorgesehen sein, sondern bloss eine ortsfeste kugelkalottenartige Abdeckung wie die Abdeckung 51. Die Einstellung des Mischwassers am Steuerelement A wird dann mittels einer hier nicht dargestellten Schraube bei der Montage fest eingestellt.

Die Funktion des Steuerelementes A ist nun folgendermassen: die in die Ausnehmung 20 mündenden Öffnungen 76 und 77 des Mischwasserkanals 25 (vergleiche Fig. 1 und 4) liegen auf einer Linie parallel zur Längsrichtung der Steuerpatrone 10. Diese Öffnungen 76 und 77 stehen nun den Durchlässen 70 und 71 strömungsmässig genau gegenüber, d.h. durch Verdrehung des drehbeweglichen Teils 26 der Steuerpatrone 10 wird die Durchflussmenge durch die Öffnungen 76, 77 gegengleich verändert. Bei dieser Verdrehung im Gewinde 73 verschiebt sich der drehbewegliche Teil 26 in Bezug auf den ortsfesten Teil 27 ein wenig, weshalb die Nut 32 leicht breiter geformt ist als der Stift 33 (vergleiche Fig. 1). Wenn der Durchfluss beispielsweise für Warmwasser (linke Seite) vergrössert wird, verringert sich der Durchfluss für Kaltwasser (rechte Seite) umgekehrt proportional. Dies bedeutet, dass die gesamte Durchflussmenge konstant bleibt, vorausgesetzt, dass die Drücke für Warmwasser und Kaltwasser mehr oder weniger gleich sind. Damit lässt sich eine beliebige Wassertemperatur zwischen den Temperaturen des Warmwassers und des Kaltwassers einstellen.

Es versteht sich von selbst, dass auch eine einseitig in eine durchgehende oder sacklochartige Ausnehmung eingeschobene Steuerpatrone mit einem einzigen Absperrventil für Kalt- und Warmwasser die Kriterien der vorliegenden Erfindung erfüllen kann. Die einzige Voraussetzung ist, dass die Anschlusskanäle in die Ausnehmung münden und strömungsmässig passend mit den Anschlussöffnungen in der Steuerpatrone in Übereinstimmung gebracht werden. Dabei ist auch die Geometrie der gesamten Anordnung nicht auf das in den Figuren dargestellten Beispiel eingeschränkt.

Des weiteren versteht es sich für den Fachmann, dass auch das Steuerelement andersartig ausgestaltet werden und dennoch die erfindungsgemässe Wirkung aufweisen kann. Insbesondere besteht eine Variante des Steuerelementes A darin, dass der rotationssymmetrische Hohlkörper, vorzugsweise als Kreiszylinder, keine Trennwand aufweist, sondern durchgehend ausgebildet ist. Die den Durchlässen gegenüberliegenden öffnungen sind dagegen über getrennte Kanäle oder Rohre mit den Kaltwasser- und Warmwassereinlässen verbunden. In diesem Fall kann der Kreiszylinder ebenfalls drehbar mit dem drehbeweglichen Teil der Steuerpatrone gelagert sein, oder wäre auch eine umgekehrte Lagerung der Teile denkbar. Das Mischwasser bildet sich in diesem Fall im Kreiszylinder, so dass über eine Ringnut das Mischwasser zum Ausflusskanal im Gehäuse geführt werden muss. Es ist jedoch auch möglich, dass der in Figur 1 als ortsfeste Teil 27 bezeichnete Teil der Steuerpatrone 10 drehbeweglich gelagert ist, und umgekehrt der drehbewegliche Teil 26 ortsfest im Tragelement 8 befestigt ist. Die entsprechende geometrische Anordnung und Ausbildung der Anschlüsse in der Form von Ringnut und kreisrunden Anschlussöffnungen sind für den Fachmann selbstverständlich.

Ferner ist es auch durchaus möglich, eine Befestigung der Steuerpatrone 10 ohne Befestungsschraube vorzusehen. Beispielsweise könnte eine ringförmige Einrastfeder in eine Umfangsnut eingreifen, die durch einen Nocken wieder ausgerastet werden kann. Auch andere, dem Fachmann bekannte Befestigungsmöglichkeiten könnten angewandt werden.

## Patentansprüche

1. Sanitäre Armatur (1), insbesondere Waschbeckenarmatur, mit einem Wassereinlass (2; 3) und einem Wasserauslass (5), mit einem in einer Steuerpatrone (10) vorgesehenen Absperrventil (34), welches über eine Zuleitung mit dem Wassereinlass (2; 3) und über eine Auslassleitung mit dem Wasserauslass (5) verbunden ist, mit einem die Steuerpatrone (10) tragenden Tragelement (8), welches zur Befestigung der Armatur (1) an einer Basis, insbesondere an einem Waschbecken (13), vorgesehen ist, und mit einem am Tragelement (8) befestigten, mindestens teilweise die Zuleitung, die Auslassleitung und die Steuerpatrone (10) umhüllenden Gehäuse (9), dadurch gekennzeichnet, dass das Gehäuse (9) über das Tragelement (8) gestülpt ist, dass im Tragelement (8) eine die Steuerpatrone (10) aufnehmende Ausnehmung (20) vorgesehen ist und die Zuleitung und die Auslassleitung mindestens abschnittweise als Kanäle (22, 23; 25) im Tragelement (8) geformt sind, welche in die Ausnehmung (20) münden, dass die Steuerpatrone (10) öffnungen aufweist, über welche das Absperrventil (34) mit den Kanälen (22, 23;25) in Strömungsverbindung steht, und dass das Gehäuse (9) einen die Ausnehmung (20) freilassenden Durchlass (18) aufweist, durch welchen die Steuerpatrone (10) das Gehäuse (9) durchgreift.

2. Sanitäre Armatur nach Anspruch 1, dadurch gekennzeichnet, dass die Ausnehmung (20) zylindrisch, insbesondere kreiszylindrisch, ist.

3. Sanitäre Armatur nach Anspruch 1 oder 2, dadurch gekennzeichnet, dass die Ausnehmung (20) vom Tragelement (8) umschlossen und einseitig offen ist.

4. Sanitäre Armatur nach Anspruch 1 oder 2, dadurch gekennzeichnet, dass die Ausnehmung (20) durch das Tragelement (8) hindurchgeht und das Gehäuse (9) zwei die Ausnehmung (20) freilassende Durchlässe (18) aufweist, durch welche die Steuerpatrone (10) das Gehäuse (9) durchgreift.

5. Sanitäre Armatur nach einem der Ansprüche 1 bis 4, dadurch gekennzeichnet, dass die Steuerpatrone (10) mittels eines einzigen Stiftes (55), insbesondere einer einzigen Schraube, in der Ausnehmung (20) befestigt ist.

6. Sanitäre Armatur nach Anspruch 5, dadurch gekennzeichnet, dass der Stift (55) zugleich das Gehäuse (9) am Tragelement (8) fixiert.

7. Sanitäre Armatur nach einem der Ansprüche 1 bis 6, dadurch gekennzeichnet, dass das Tragelement (8) und das Gehäuse (9) Führungselemente (4; 17) aufweisen, durch welche das Gehäuse (9) beim Aufstülpen geführt ist.

8. Sanitäre Armatur nach Anspruch 7, dadurch gekennzeichnet, dass die Führungselemente einen Anschlussstutzen (4) am Tragelement (8) aufweisen, durch den der teilweise die Auslassleitung bildende Kanal (24) im Tragelement (8) verläuft, und ein mit dem Anschlussstutzen (4) zusammenwirkendes Führungselement durch einen im Gehäuse geformten und mit dem Auslass verbundenen Ausflusskanal (65) gebildet ist, der beim Auf stülpen des Gehäuses (9) auf den Anschlussstutzen (4) aufgesteckt wird.

9. Sanitäre Armatur nach einem der Ansprüche 1 bis 8, dadurch gekennzeichnet, dass ein Kaltwassereinlass (2), ein Warmwassereinlass (3) und in der Steuerpatrone (10) ein Absperrventil (34) für Kaltwasser, ein Absperrventil (34) für Warmwasser und ein Steuerelement (A) für das Mischverhältnis zwischen Warmwasser und Kaltwasser vorgesehen sind, dass die Absperrventile (34) auf einer Achse und einander gegenüberliegend in der Steuerpatrone (10) angeordnet sind und dass mindestens ein Bedienungselement (47) über das Gehäuse (9) vorstehend, an der Steuerpatrone (10) drehbar befestigt ist, welches mit dem Steuerelement (A) in Wirkverbindung steht.

10. Sanitäre Armatur mit einem Absperrventil (34) für Kaltwasser, einem Absperrventil (34) für Warmwasser und einem Steuerelement (A) für das Mischverhältnis zwischen Kaltwasser und Warmwasser nach Anspruch 9, dadurch gekennzeichnet, dass das Steuerelement (A) einen rotationssymmetrischen Hohlkörper (28) mit radialen, in Umfangsrichtung gegensinnig verjüngten, nutenförmigen Durchlässen (70, 71) und strömungsmässig mit ihnen zusammenwirkende Öffnungen (76, 77) aufweist, welchen die Durchlässe (70, 71) gegenüberliegen und bezüglich deren die Durchlässe (70, 71) drehbeweglich sind.

11. Sanitäre Armatur nach Anspruch 10, dadurch gekennzeichnet, dass eine Steuerpatrone (10) die Absperrventile (34) und das Steuerelement (A) aufweist und die Steuerpatrone (10) einen bezüglich eines Tragelementes (8) drehbeweglichen Teil (26) und einen bezüglich des Tragelementes (8) ortsfesten Teil (27) aufweist.

12. Sanitäre Armatur nach Anspruch 11, dadurch gekennzeichnet, dass zwischen dem drehbeweglichen Teil (26) und dem ortsfesten Teil (27) der Steuerpatrone (10) ein Gewinde (73) mit geringer Steigung vorgesehen ist.

13. Sanitäre Armatur nach Anspruch 11 oder 12, dadurch gekennzeichnet, dass ein Teil (27) der Steuerpatrone (10) stufenweise verjüngt ausgebildet ist, und der andere Teil (26) der Steuerpatrone (10) ebenfalls stufenartig verjüngt und in den einen Teil (27) eingreifend ausgebildet ist.

14. Sanitäre Armatur nach einem der Ansprüche 11 bis 13, dadurch gekennzeichnet, dass eine Drehbegrenzung zwischen dem drehbeweglichen Teil (26) und dem ortsfesten Teil (27) der Steuerpatrone (10) vorgesehen ist, die einen in einer begrenzten Nut (32) bewegbaren Stift (33) aufweist.

15. Sanitäre Armatur nach einem der Ansprüche 11 bis 14, dadurch gekennzeichnet, dass die Absperrventile (34) je von einem elektromagnetischen Betätigungsorgan (44) betätigbar sind, die mit den Absperrventilen (34) seitlich, einander gegenüberliegend in der Steuerpatrone (10) befestigt sind.

16. Sanitäre Armatur nach einem der Ansprüche 11 bis 15, dadurch gekennzeichnet, dass der Hohlkörper (28) durch eine Trennwand (29) in zwei Kammern (30; 31) für Warmwasser und für Kaltwasser unterteilt ist und die zwei Öffnungen (76, 77) in einen gemeinsamen Kanal (25) münden, dass eines der Absperrventile (34) und die nutenförmigen Durchlässe (70, 71) im drehbeweglichen Teil (26) der Steuerpatrone (10) angeordnet sind, und dass das andere Absperrventil (34) und die Öffnungen (76, 77) im ortsfesten Teil (27) der Steuerpatrone (10) angeordnet sind.

17. Sanitäre Armatur nach einem der Ansprüche 11 bis 15, dadurch gekennzeichnet, dass die zwei öffnungen (76, 77) mit je einem getrennten Kanal für Warmwasser und einem getrennten Kanal für Kaltwasser in Strömungsverbindung stehen, dass die Absperrventile (34) in Strömungsverbindung mit den Öffnungen (76, 77) im ortsfesten Teil (27) der Steuerpatrone (10) angeordnet sind, und dass die nutenförmigen Durchlässe (70, 71) im drehbeweglichen Teil (26) der Steuerpatrone (10) angeordnet sind.

## Claims

1. Sanitary fitting (1), in particular washbasin fitting, having a water inlet (2; 3) and a water outlet (5), having a shut-off valve (34) which is provided in a control cartridge (10) and is connected to the water inlet (2; 3) via a supply line and to the water outlet (5) via an outlet line, having a bearing element (8) which bears the control cartridge (10) and is provided for fastening the fitting (1) on a base, in particular on a washbasin (13), and having a housing (9) which is fastened on the bearing element (8) and at least partially encloses the supply line, the outlet line and the control cartridge (10), characterized in that the housing (9) is slipped over the bearing element (8), in that a clearance (20) which receives the control cartridge (10) is provided in the bearing element (8), and at least some sections of the supply line and the outlet line are formed as ducts (22, 23; 25) in the bearing element (8), which ducts open into the clearance (20), in that the control cartridge (10) exhibits openings via which the shut-off valve (34) is in flow connection with the ducts (22, 23; 25), and in that the housing (9) exhibits a through-passage (18) which leaves the clearance (20) free and by way of which the control cartridge (10) engages through the housing (9).

2. Sanitary fitting according to Claim 1, characterized in that the clearance (20) is cylindrical, in particular circular-cylindrical.

3. Sanitary fitting according to Claim 1 or 2, characterized in that the clearance (20) is enclosed by the bearing element (8) and is open on one side.

4. Sanitary fitting according to Claim 1 or 2, characterized in that the clearance (20) passes through the bearing element (8) and the housing (9) exhibits two through-passages (18) which leave the clearance (20) free and by way of which the control cartridge (10) engages through the housing (9).

5. Sanitary fitting according to one of Claims 1 to 4, characterized in that the control cartridge (10) is fastened in the clearance (20) by means of a single pin (55), in particular a single screw.

6. Sanitary fitting according to Claim 5, characterized in that the pin (55) simultaneously fixes the housing (9) on the bearing element (8).

7. Sanitary fitting according to one of Claims 1 to 6, characterized in that the bearing element (8) and the housing (9) exhibit guide elements (4; 17) by means of which the housing (9) is guided when it is slipped on.

8. Sanitary fitting according to Claim 7, characterized in that the guide elements exhibit a connection stub (4) on the bearing element (8), the duct (24), which forms part of the outlet line, in the bearing element (8) running through said connection stub, and a guide element which interacts with the connection stub (4) is formed by an outflow duct (65) which is formed in the housing, is connected to the outlet and, when the housing (9) is slipped on, is plugged onto the connection stub (4).

9. Sanitary fitting according to one of Claims 1 to 8, characterized in that provision is made for a coldwater inlet (2), a hot-water inlet (3) and, in the control cartridge (10), a shut-off valve (34) for cold water, a shut-off valve (34) for hot water and a control element (A) for the mixing ratio between hot water and cold water, in that the shut-off valves (34) are arranged on an axis, and located opposite one another, in the control cartridge (10), and in that at least one operating element (47), projecting beyond the housing (9), is fastened rotatably on the control cartridge (10), said operating element being in operative connection with the control element (A).

10. Sanitary fitting having a shut-off valve (34) for cold water, a shut-off valve (34) for hot water and a control element (A) for the mixing ratio between cold water and hot water, according to Claim 9, characterized in that the control element (A) exhibits a rotationally symmetrical hollow body (28) with radial, groove-shaped through-passages (70, 71), tapered counter to one another in the circumferential direction, and openings (76, 77) which interact with said through-passages in terms of flow, are located opposite the through-passages (70, 71) and with respect to which the through-passages (70, 71) can be moved in rotation.

11. Sanitary fitting according to Claim 10, characterized in that a control cartridge (10) exhibits the shut-off valves (34) and control element (A), and the control cartridge (10) exhibits a part (26) which can be moved in rotation with respect to a bearing element (8) and a part (27) which is stationary with respect to the bearing element (8).

12. Sanitary fitting according to Claim 11, characterized in that a thread (73) with a small pitch is provided between the rotationally movable part (26) and the stationary part (27) of the control cartridge (10).

13. Sanitary fitting according to Claim 11 or 12, characterized in that one part (27) of the control cartridge (10) is designed such that it is tapered in a stepwise manner, and the other part (26) of the control cartridge (10) is designed such that it is likewise tapered in the manner of steps and engages into the part (27).

14. Sanitary fitting according to one of Claims 11 to 13, characterized in that provision is made, between the rotationally movable part (26) and the stationary part (27) of the control cartridge (10), for a rotation-limiting means which exhibits a pin (33) which can be moved in a restricted groove (32).

15. Sanitary fitting according to one of Claims 11 to 14, characterized in that the shut-off valves (34) can each be actuated by an electromagnetic actuating member (44), these being fastened, with the shut-off valves (34), laterally in the control cartridge (10), located one opposite the other.

16. Sanitary fitting according to one of Claims 11 to 15, characterized in that the hollow body (28) is subdivided by a partition wall (29) into two chambers (30; 31) for hot water and for cold water, and the two openings (76, 77) open into a common duct (25), in that one of the shut-off valves (34) and the groove-shaped through-passages (70, 71) are arranged in the rotationally movable part (26) of the control cartridge (10), and in that the other shut-off valve (34) and the openings (76, 77) are arranged in the stationary part (27) of the control cartridge (10).

17. Sanitary fitting according to one of Claims 11 to 15, characterized in that the two openings (76, 77) are each in flow connection with a separate duct for hot water and a separate duct for cold water, in that the shut-off valves (34) are arranged in flow connection with the openings (76, 77) in the stationary part (27) of the control cartridge (10), and in that the groove-shaped through-passages (70, 71) are arranged in the rotationally movable part (26) of the control cartridge (10).

## Revendications

1. Armature sanitaire (1), en particulier pour lavabo, avec une entrée (2; 3) et une sortie (5) d'eau, comprenant un robinet d'arrêt (34) prévu dans une cartouche de commande (10), raccordé par une conduite d'arrivée à l'entrée d'eau (2; 3) et par une conduite d'évacuation à la sortie d'eau (5), avec un élément porteur (8) supportant cette cartouche de commande (10), prévu pour la fixation de l'armature (1) à une base, en particulier à un lavabo (13), et avec un corps (9) fixé à l'élément porteur (8), enveloppant au moins en partie la conduite d'arrivée, la conduite d'évacuation et la cartouche de commande (10), caractérisée en ce que le corps (9) est emboîté sur l'élément porteur (8), en ce qu'est prévu dans l'élément porteur (8) un espace creux (20) recevant la cartouche de commande (10), la conduite d'arrivée et la conduite d'évacuation étant formées dans l'élément porteur (8) par au moins des tronçons sous forme de canaux (22, 23; 25) qui débouchent dans cet espace creux (20), en ce que la cartouche de commande (10) présente des ouvertures par lesquelles le robinet d'arrêt (34) est en liaison d'écoulement avec les canaux (22, 23; 25), et en ce que le corps (9) présente un passage (18) libérant l'espace creux (20), par lequel la cartouche de commande (10) pénètre dans le corps (9).

2. Armature sanitaire suivant la revendication 1, caractérisée en ce que l'espace creux (20) est cylindrique, en particulier à section circulaire.

3. Armature sanitaire suivant la revendication 1 ou 2, caractérisée en ce que l'espace creux (20) est entouré par l'élément porteur (8) et est ouvert à une extrémité.

4. Armature sanitaire suivant la revendication 1 ou 2, caractérisée en ce que l'espace creux (20) passe à travers l'élément porteur (8), et en ce que le corps (9) présente deux passages (18) libérant cet espace creux (20), à travers lesquels la cartouche de commande (10) pénètre dans ce corps (9).

5. Armature sanitaire suivant l'une quelconque des revendications 1 à 4, caractérisée en ce que la cartouche de commande (10) est fixée au moyen d'une seule tige (55), en particulier d'une seule vis, dans l'espace creux (20).

6. Armature sanitaire suivant la revendication 5, caractérisée en ce que la tige (55) solidarise également le corps (9) avec l'élément porteur (8).

7. Armature sanitaire suivant l'une quelconque des revendications 1 à 6, caractérisée en ce que l'élément porteur (8) et le corps (9) présentent des éléments de guidage (4; 17), par lesquels le corps (9) est guidé lors de l'emboîtement.

8. Armature sanitaire suivant la revendication 7, caractérisée en ce que les éléments de guidage présentent un raccord (4) avec l'élément porteur (8), par lequel le canal (24) formant partiellement la conduite d'évacuation se poursuit dans cet élément porteur (8), un élément de guidage coopérant avec le raccord (4) étant formé par un canal d'échappement (65) prévu dans le corps et raccordé à la sortie, enfilé sur le raccord (4) lors de l'emboîtement du corps (9).

9. Armature sanitaire suivant l'une quelconque des revendications 1 à 8, caractérisée en ce qu'une entrée d'eau froide (2), une entrée d'eau chaude (3) et, dans la cartouche de commande (10), un robinet d'arrêt (34) pour l'eau froide, un robinet d'arrêt (34) pour l'eau chaude et un élément de commande (A) pour les proportions de mélange entre l'eau chaude et l'eau froide sont prévus, en ce que les robinets d'arrêt (34) sont disposés sur un axe et en face l'un de l'autre dans la cartouche de commande (10), et en ce qu'au moins un élément de manoeuvre (47), qui se trouve en liaison active avec l'élément de commande (A), est calé sur la cartouche (10), en saillie au-delà du corps (9).

10. Armature sanitaire avec un robinet d'arrêt (34) pour l'eau froide, un robinet d'arrêt (34) pour l'eau chaude et un élément de commande (A) pour les proportions du mélange entre l'eau froide et l'eau chaude, suivant la revendication 9, caractérisée en ce que l'élément de commande (A) présente un corps creux (28), à symétrie de révolution, avec des passages radiaux en forme de rainures (70, 71) se rétrécissant à contre-sens dans le sens périphérique et des ouvertures (76, 77) coopérant avec ceux-ci par rapport à l'écoulement, en face desquelles se trouvent les passages (70, 71) et par rapport auxquelles ces passages (70, 71) peuvent pivoter.

11. Armature sanitaire suivant la revendication 10, caractérisée en ce que la cartouche de commande (10) comporte les robinets d'arrêt (34) et l'élément de commande (A), et la cartouche de commande (10) présentant une partie (26) pouvant tourner par rapport à l'élément porteur (8) et une partie (27), fixe par rapport à cet élément porteur (8).

12. Armature sanitaire suivant la revendication 11, caractérisée en ce qu'un filet (73) de faible pas est prévu entre la partie pouvant tourner (26) et la partie fixe (27) de la cartouche de commande (10).

13. Armature sanitaire suivant la revendication 11 ou 12, caractérisée en ce qu'une première partie (27) de la cartouche de commande (10) a un profil se rétrécissant par paliers et l'autre partie (26) de cette cartouche (10) a également un profil se rétrécissant par paliers et s'engageant dans la première partie (27).

14. Armature sanitaire suivant l'une quelconque des revendications 11 à 13, caractérisée en ce que, entre la partie pouvant tourner (26) et la partie fixe (27) de la cartouche de commande (10), est réalisée une limitation de la rotation, au moyen d'une tige (33) mobile dans une rainure limitée (32).

15. Armature sanitaire suivant l'une quelconque des revendications 11 à 14, caractérisée en ce que les robinets d'arrêt (34) peuvent être actionnés par des organes électromagnétiques d'actionnement respectifs (44), fixés l'un en face de l'autre dans la cartouche de commande (10), latéralement vis-à-vis des robinets d'arrêt (34).

16. Armature sanitaire suivant l'une quelconque des revendications 11 à 15, caractérisée en ce que le corps creux (28) est subdivisé par une paroi de séparation (29) en deux chambres (30; 31) pour l'eau chaude et pour l'eau froide, les deux ouvertures (76, 77) débouchant dans un canal commun (25), en ce qu'un des robinets d'arrêt (34) et les passages (70, 71) en forme de rainures sont disposés dans la partie pouvant tourner (26) de la cartouche de commande (10), et en ce que l'autre robinet d'arrêt (34) et les ouvertures (76, 77) sont disposés dans la partie fixe (27) de cette cartouche (10).

17. Armature sanitaire suivant l'une quelconque des revendications 11 à 15, caractérisée en ce que les deux ouvertures (76, 77) se trouvent en liaison d'écoulement chacune avec un canal séparé, pour l'eau chaude et pour l'eau froide, en ce que les robinets d'arrêt (34) sont disposés dans la partie fixe (27) de la cartouche de commande (10), en liaison d'écoulement avec les ouvertures (76, 77), et en ce que les passages (70, 71) en forme de rainures sont disposés dans la partie pouvant tourner (26) de la cartouche (10).
